# EUROPEAN PATENT APPLICATION

(11) **EP 0 541 010 A1**
(43) Date of publication of application: **12.05.1993**
(21) Application number: 92118575.7
(22) Date of filing: 30.10.1992
(51) Int. Cl.: B23K 9/32, B08B 15/04

(54) **Fumes aspirator**

(30) Priority: 06.11.1991 IT UD910187
(71) Applicant: BADIBLOC Srl, I-33100 Udine (IT)
(72) Inventor: Badin, Eugenio, I-33082 Azzano Decimo (PN) (IT)
(74) Representative: Petraz, Gilberto Luigi

(57) **Abstract**

Fumes aspirator (10) which is suitable to aspirate fumes, vapours, etc. and is of a type which can be fitted to a wall or ceiling or to a stand and can also be positioned so as to be stationary or movable, and which is of a type with a plurality of combinable pipes connected directly to a source (14) of aspiration of fumes or to a centralized plant (15) for the aspiration of fumes, the aspirator (10) comprising at least one second flexible pipe segment (19) and one third flexible pipe segment (21), the second and third flexible pipe segments (19-21) being connected together (20) and cooperating with a positioning system (22) able to run on guides (26) so as to enable an aspiration hood (23) to be displaced horizontally (30), a welding helmet (39) being solidly fixed to the aspiration hood (23), the aspirator (10) comprising also a substantially horizontal first tubular pipe segment (16) having a progressively variable cross-section, this first pipe segment (16) being rotatably (11-13) connected to the source (14-15) of aspiration and bearing the guides (26), the positioning system (22) making possible angular and directional positionings (35-36-37) of the aspiration hood (23).

## Description

This invention concerns a fumes aspirator as set forth in the main claim. To be more exact, the invention concerns a multipurpose apparatus which is especially suitable for aspirating fumes, vapours, dusts, etc., particularly during welding operations and is able to support the welder's helmet as well as aspirating the fumes produced.

The state of the art covers manifold apparatuses which are suitable to aspirate fumes, vapours, dusts and other substances emitted in normal processes in the field of industry.

Among such processes particular attention should be paid to the aspiration of welding fumes, and this is an operation to which we shall refer in particular in the following description, although the apparatus according to this invention is also applied advantageously to other normal processes in the industrial field.

The fumes released by welding operations are normally aspirated by means of aspiration arms, which include at one end a hood borne in the area of emission of fumes and are connected at their other end to a fan or a centralized system of ducts.

When the aspiration arms are connected to a centralized system of ducts, a problem arises when the collection pipe of the aspiration arm is put under pressure so as to expel the powders which have gathered within that pipe.

In fact, with the apparatuses of the state of the art the dusts are expelled through the aspiration arms because those arms are connected directly to the collection pipe.

Moreover, the aspiration devices of the state of the art entail the drawback that all the dusts aspirated, whether fine or coarse, are conveyed towards the aspirator, and it often happens that a part of those dusts becomes deposited on the rotary element of the aspiration means and unbalances that element.

This imbalance leads to excessive wear of the rotary element and causes vibrations, which make the working of the aspiration means very noisy.

In the case of processes generating especially abrasive dusts or in the case of acid welding it may happen that the same rotary element is fully worn out after only a few hours of work.

The aspiration arms of the state of the art offer various possibilities of articulation and structures differentiated to suit the usages involved.

In any event all these structures include a plurality of pipes connected together with flexible unions and attached with articulated joints.

External systems with springs to connect the various parts constituting the arms are fitted to support and make easier the handling of the arms.

The arms can be fitted to a wall, a stand or a ceiling and in this way will cover working arcs from 180° to 360°.

DE-C-3.606.308 discloses an aspiration device of the above type.

DE-3.434.519 discloses an aspiration device of the above type, in which the last element of the aspiration pipe advantageously has a welder's helmet incorporated in its end portion.

Moreover, the aspiration device of the above patent includes flexible tubular elements connected to slidable means for easy horizontal displacement and to means for vertical positioning of the welder's helmet in a correct position.

DE-U-7,520,283 discloses an aspiration device which comprises powered means for orientation and angular positioning of the terminal, vertical aspiration pipe bearing a hood at its end; these means enable the aspiration hood to be positioned correctly in relation to the working position.

The aspiration arms of the state of the art entail a plurality of shortcomings; they are hard for the welder to handle and become even more so when the working zone to be covered is great.

Next, the working zone is very limited unless complex structures are used for the aspiration arm to the detriment of the ease of handling and the intrinsic cost.

Furthermore, the devices of the state of the art are restricted as regards their three-dimensional movements, thus making their positioning even harder in the vicinity of the welding areas.

The welder therefore has the problem of manipulating almost continuously the aspiration hood so as to position it properly and is engaged at the same time in supporting and manipulating the welder's helmet.

The present applicant has designed, tested and embodied this invention to overcome the shortcomings of the state of the art and to achieve further advantages.

The invention is set forth and characterized in the main claim, while the dependent claims describe variants of the idea of the main embodiment.

The fumes aspirator according to the invention has a layout which can be structured in various ways to suit the requirements, but consists essentially of a tubular upright capable of being rotated about its axis and of being connected to direct or indirect aspiration means.

The upright bears a first laterally extending, tubular segment which has a cylindrical, ovoid, prismatic or any desired section that can be connected to at least two other flexible, tubular segments.

This first laterally extending, tubular segment is equipped with means to preset its orientation and with friction means to adjust the ease of alteration of that orientation.

The first laterally extending, tubular segment includes, in the direction of aspiration of fumes and starting from its point of connection to a second flexible, tubular segment, a portion having a progressively growing cross-section followed by a portion having a progressively decreasing cross-section, which ends at the tubular upright.

A pocket to collect dusts is thus created at the point connecting the two portions having progressively variable cross-sections.

The pipe portion having a progressively growing cross-section acts as a dust remover working by gravity since the aspirated fumes entering the zone having a progressively greater cross-section are slowed down and the heavier particles fall to the bottom of the pocket.

An opening is provided at the bottom of the pocket and can be closed momentarily with a door which can be shut advantageously guillotine-wise; the coarse and heavy dusts deposited on the bottom of the pocket can be removed through this opening.

A bag to collect and remove these dusts is fitted at this opening below the first tubular segment.

A plurality of separator baffles is installed in the first laterally extending, tubular segment so as to facilitate separation and collection of dusts and acts as an inertial dust remover, since the heavier particles borne by the fumes are deviated and slowed by these separator baffles and fall to the bottom of the pocket.

The second and third flexible, tubular segments are connected to slidable means providing ready horizontal displacement and to means providing stable vertical positioning.

The third flexible, tubular segment advantageously has a welder's helmet incorporated in its end.

The third flexible, tubular segment comprises means for its rotation about its own vertical axis and also means for the angular orientation and for the maintaining in position of the welder's helmet in relation to the working position.

The third flexible, tubular segment can be oriented in all directions and can make welding possible also upwards from below.

Thus the apparatus according to the invention offers complete flexibility as regards its correct positioning in relation to the working position or positions and provides total ease of handling for the welder.

The welder himself can also carry out welding operations with fully free hands, for the aspiration hood and welder's helmet are supported independently.

Moreover, a closure device, which is advantageously a non-return valve, is fitted to the aspiration device according to the invention and remains open when the aspiration means are working but closes as soon as the aspiration means are halted.

The aspiration device connected to the fumes aspirator according to the invention is actuated by a switch installed on the vertical positioning means of the third tubular segment.

This switch on the fumes aspirator according to the invention cooperates with a counterweight, which clamps mechanically the upward vertical positioning of the aspiration hood and halts the fumes aspirator means.

The attached figures, which are given as a non-restrictive example, show a preferred lay-out of the invention as follows:-
- Fig.1a: is a diagrammatic and partly cutaway side view of a fumes aspirator according to the invention;
- Figs.1b and 1c: show possible movements and positionings of the aspirator hood according to the invention;
- Fig.2a: shows a detail of the apparatus of Fig.1a in an enlarged scale;
- Fig.2b: shows a cross-section along the line B-B of Fig.2a;
- Fig.2c: shows a cross-section along the line A-A of Fig.2a.

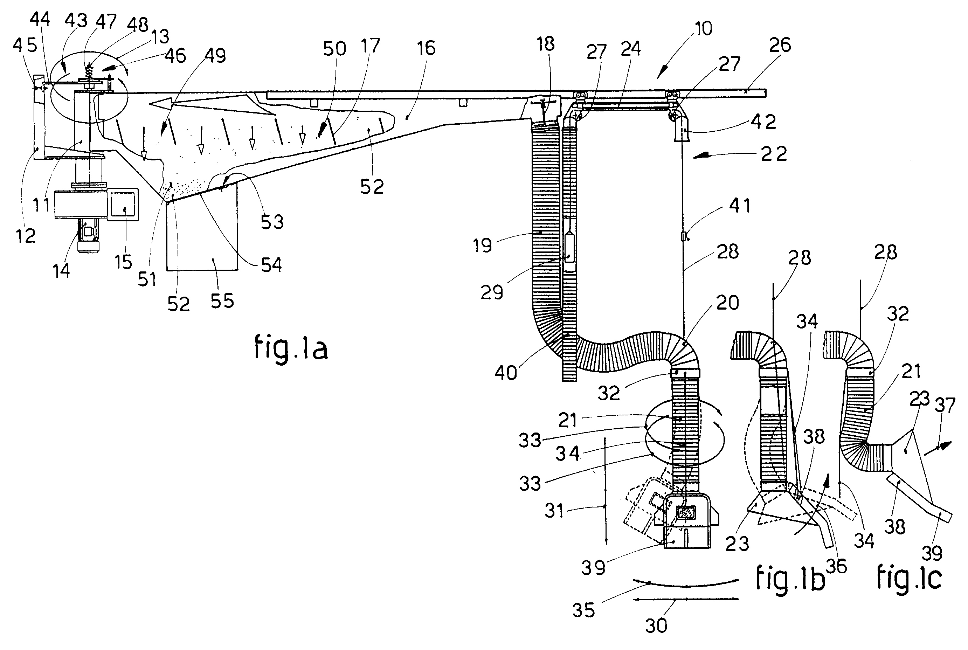

In Fig.1a a fumes aspirator 10 according to the invention consists of a plurality of elements which can be connected together and adapted to the requirements of the application in question.

In the example shown in the figures the aspirator 10 consists of a tubular upright 11 fitted to a support 12 and able to rotate according to the arrows 13 about its vertical axis and to be positioned by first auxiliary clamping means.

The upright 11 can be fitted to a wall as in Fig.1 and thus can rotate by about 180° but can also be fitted to a ceiling (rotation 360°) or to a stand (rotation about 360°).

In this last case the upright 11 may be borne on a movable trolley and be able to be conveyed to worksites as required.

The required angular position of the upright 11 can be retained by suitable means 43 to set its orientation; these means 43 will consist in this example of a substantially horizontal shaft 44 fitted to the support 12 by means of an adjustment screw 45. The upright 11 is pivoted on the support 12.

The sensitiveness of the orientation of the aspirator 10 can be adjusted by a friction means 46 acting on the tubular upright 11 and capable of being adjusted as required. In this example the friction means 46 consists of a spring 47 coaxial with the tubular upright 11 and able to be adjusted by a screw 48.

An aspiration means is referenced with 14 in Fig.1a and may be, for instance, a fan and be connected directly to the tubular upright 11, whereas a duct for possible connection to a centralized aspiration plant is referenced with 15.

A first horizontal segment 16 of pipe extends laterally from the upright 11 and is advantageously rigid and of the desired length; this first segment 16 is secured rigidly to the upright 11.

This first horizontal segment 16 of pipe comprises, starting from the side opposite to the upright 11 and in the direction of aspiration of fumes, a diverging portion 50 followed by a converging portion 49, thus creating a pocket 51 at the point where the two portions 50-49 meet.

The diverging portion 50 of pipe acts as a gravity-type dust remover, for the aspirated fumes entering the diverging portion 50 are slowed down and the heavier particles 52 drop to the bottom of the pocket 51.

An opening 53 is provided at the bottom of the pocket 51 and can be shut momentarily by a door 54, which can be closed advantageously guillotine-wise. The coarse and heavy particles 52 which are deposited on the bottom of the pocket 51 can be removed through the opening 53.

A bag to collect and remove the particles 52 is fitted to the opening 53 and below the first horizontal, tubular segment 16.

A plurality of separator baffles 17 is installed in the first horizontal segment 16 of pipe so as to assist separation and collection of the particles 52; these baffles 17 act as dust removers working by inertia, since the heavier particles 52 conveyed by the fumes are deviated and slowed by the separator baffles 17 and fall to the bottom of the pocket 51.

A second flexible, tubular segment 19 is fitted solidly to the end of the first horizontal, tubular segment 16; in this example a third flexible, tubular segment 21 is connected by a joint 20 to the second flexible, tubular segment 19.

A non-return valve 18 is fitted to the upper outlet of the second flexible, tubular segment 19 and closes the section of that second segment 19 automatically when the aspiration means 14 is halted.

The second and third flexible, tubular segments 19-21 are connected at their joint 20 to a system 22 that positions an aspiration hood 23 located at the end of the third flexible segment 21. In this case a welder's helmet 39 is solidly fitted to the aspiration hood 23.

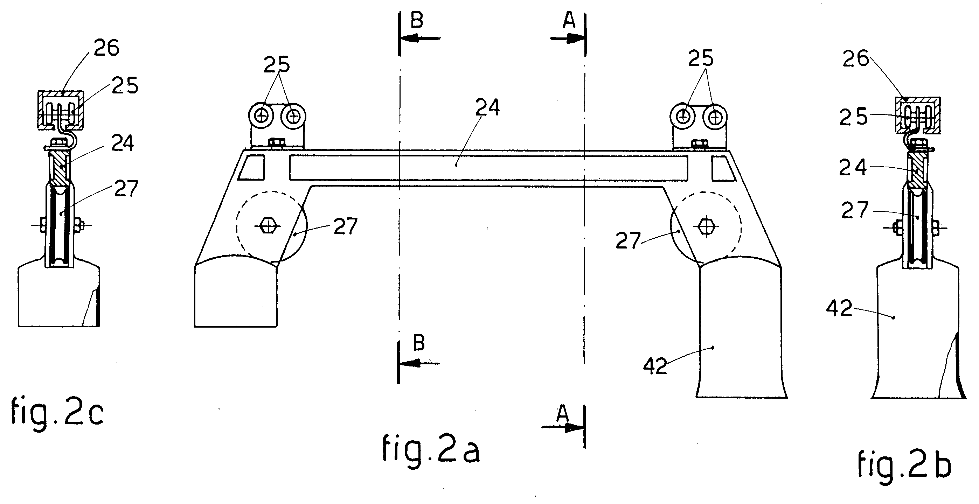

The positioning system 22 (see Figs.2a, b, c) consists of a frame 24 able to run on wheels 25 on coordinated guides 26 secured to the first horizontal, tubular segment 16. The frame 24 includes at its ends supporting means for a pair of pulleys 27 on which a metallic cable 28 can run advantageously.

One end of the cable 28 passes through the joint 20, extends within the third flexible segment 21 and is secured to the aspiration hood 23, of which the cable 28 forms a support; the other end of the cable 28 comprises a counterweight 29 protected by a holder 40.

A microswitch 41 is fixed advantageously to the metallic cable 28 and has the task of stopping the aspiration action when the aspirator 10 is halted. An abutment bell 42 is included on the frame 24 for this purpose and can cooperate with the microswitch 41 in any angular position of the latter 41 in relation to the cable 28.

The abutment bell 42 according to the invention acts also to clamp mechanically the travel of the metallic cable 28, thus preventing the assembly of the aspiration hood 23 and helmet 39, when returned by the counterweight 29, from stopping at a position which the welder cannot reach.

Such a lay-out makes possible the easy positioning of the aspiration hood 23 in a horizontal plane according to the arrows 30 by means of second auxiliary clamping means and with the mere displacement of the frame 24 along the guides 26; likewise it is possible to position and keep in a vertical position the aspiration hood 23 according to the arrows 31 by merely displacing the respective second 19 and third 21 flexible, tubular segments upwards or downwards.

The frame 24 can be kept in a required horizontal position by suitable clamping means.

The third flexible segment 21 is connected to the joint 20 by a rotation means; such as a thrust bearing 32, which enables the third segment 21 to rotate about its vertical axis according to the arrows 33.

The welder's helmet 39 is secured to the aspiration hood 23 according to the invention and therefore can be positioned in coordination with the aspiration hood 23 in the working position and is kept there without using the hand of the welder, who has both his hands free during welding operations.

The thrust bearing 32 and welder's helmet 39 are connected to each other by a flexible element 34, such as a small chain or the like, which enables the hood 23 and the helmet 39 connected thereto to possess full freedom of angular positioning.

The flexible element 34 has the purpose of keeping the helmet 39 correctly positioned vertically.

According to a variant a magnet, which is not shown in the figures, is fitted to the aspiration hood 23 and enables the hood 23 to be positioned and held in any position, even at an inclination to the supporting cable 28. In fact, by merely making the magnet cooperate with a ferrous metallic structure it is possible to position the aspiration hood 23 momentarily and to prevent the hood 23 returning to the vertical plane of the supporting cable 28.

Fig.1a shows with lines of dashes a position of angular oscillation, according to the arrow 35, substantially on a vertical plane.

Fig.1b shows, again with lines of dashes according to a partial side view, the angular positioning of the assembly of the hood 23 and helmet 39 according to the arrow 36 in a vertical plane substantially orthogonal to the plane of oscillation 35 shown in Fig.1a.

Fig.1c shows with a partial side view a possible overturned position of the assembly of the hood 23 and helmet 39; this position can be used for upward welding operations in a direction according to the arrow 37. In this case the flexible element 34 can be disconnected from its point of attachment 38 on the helmet 39.

The lay-out shown of the aspirator 10 enables even very great working areas to be covered without any problems in the displacement and handling of the aspirator 10.

We have described here a preferred embodiment of the invention, but it is obvious that other variants are possible for a person skilled in this field without departing thereby from the scope of the invention as claimed.

## Claims

1. Fumes aspirator (10) which is suitable to aspirate fumes, vapours, etc. and is of a type which can be fitted to a wall or ceiling or a stand and can also be positioned so as to be stationary or movable, and which is of a type with a plurality of combinable pipes connected directly to a source (14) of aspiration of fumes or to a centralized plant (15) for the aspiration of fumes, the aspirator (10) comprising at least one second flexible pipe segment (19) and one third flexible pipe segment (21), the second and third flexible pipe segments (19-21) being connected together (20) and cooperating with a positioning system (22) able to run on guides (24) so as to enable an aspiration hood (23) to be displaced horizontally (30), a welding helmet (39) being solidly fixed to the aspiration hood (23), the aspirator (10) being characterized in that it comprises also a substantially horizontal first tubular pipe segment (16) having a progressively variable cross-section, this first pipe segment (16) being rotatably (11-13) connected to the source (14-15) of aspiration and bearing the guides (26), the positioning system (22) making possible angular and directional positionings (35-36-37) of the aspiration hood (23).

2. Fumes aspirator (10) as claimed in Claim 1, in which the positioning system (22) consists of a frame (24) able to move on guides (26) supporting movable cable means (28), which are connected at one end to the assembly of the aspiration hood (23) and welding helmet (39) and at their other end to means (29) that position the third flexible pipe segment (21) in the vertical plane.

3. Fumes aspirator (10) as claimed in Claim 1 or 2, in which the means (29) that position the third flexible pipe segment (21) in the vertical plane are a counterweight assembly.

4. Fumes aspirator (10) as claimed in any claim hereinbefore, in which the cable means (28) run within a joint (20) connecting the second and third flexible, pipe segments (19-21) and within the third flexible, pipe segment itself (21).

5. Fumes aspirator (10) as claimed in any claim hereinbefore, in which the cable means (28) comprise switch means (41) to stop the aspiration action which cooperate with abutment bell means (42).

6. Fumes aspirator (10) as claimed in any claim hereinbefore, in which the switch means (41) and the abutment bell means (42) constitute brake means.

7. Fumes aspirator (10) as claimed in any claim hereinbefore, which comprises first auxiliary means to clamp the angular positions reached (13) and second auxiliary means to clamp the horizontal positions reached (30).

8. Fumes aspirator (10) as claimed in any claim hereinbefore, in which the first horizontal, tubular segment (16) having a progressively variable cross-section includes a discharge door (54).

9. Fumes aspirator (10) as claimed in any claim hereinbefore, in which the first horizontal, tubular segment (16) having a progressively variable cross-section comprises internal separator baffles (17).

10. Fumes aspirator (10) as claimed in any claim hereinbefore, in which a non-return valve (18) is included upstream of the source that aspirates the fumes.

11. Fumes aspirator (10) as claimed in any claim hereinbefore, which includes adjustable (48) friction means (46) cooperating with the axis of orientation.

12. Fumes aspirator (10) as claimed in any claim hereinbefore, which includes means (44-45) to adjust the vertical positioning in cooperation with the axis of orientation.
